# EUROPEAN PATENT SPECIFICATION

(11) **EP 4 571 434 B1**
(45) Date of publication and mention of the grant of the patent: **18.11.2026**
(21) Application number: 23852172.8
(22) Date of filing: 13.04.2023
(51) Int. Cl.: G06F 30/20, G05B 13/04, G06Q 30/0201, G06Q 40/06, G06Q 50/04

(54) **SELECTION SYSTEM**
AUSWAHLSYSTEM
SYSTÈME DE SÉLECTION

(30) Priority: 09.08.2022 WO PCT/JP2022/030433
(43) Date of publication of application: 18.06.2025
(73) Proprietor: DAIKIN INDUSTRIES, LTD., Osaka-shi, Osaka 530-0001 (JP)
(72) Inventor: IWANAGA, Yusuke, Osaka-shi, Osaka 530-0001 (JP); TANAKA, Yoshinori, Osaka-shi, Osaka 530-0001 (JP); NIWA, Takashi, Osaka-shi, Osaka 530-0001 (JP); HIRAKAWA, Taku, Osaka-shi, Osaka 530-0001 (JP)
(74) Representative: Global IP Europe Patentanwaltskanzlei
(86) International application number: PCT/JP2023/015053
(87) International publication number: WO 2024/034186

(56) References cited:
- WO-A1-2019/172088
- WO-A1-2019/172088
- JP-A- 2001 051 719
- JP-A- 2001 051 719
- JP-A- 2002 309 271
- JP-A- 2002 309 271
- JP-A- H09 179 604
- JP-A- H09 179 604
- JP-A- S62 237 903
- JP-A- S62 237 903
- US-A1- 2010 222 910

## Description

### [Technical Field]

The present invention relates to a selection system.

### [Background Art]

Patent Literature 1 (JPA No. 2014-094938) shows a technique in which a designer of equipment such as a rectifying tower selects an operational condition of the equipment, and a target product is produced.

JP 2001 051719 A discloses a selection system for selecting an operational condition of equipment in which a cost including a variable expense of the equipment is low, the equipment including a rectifying tower which is configured to purify a raw material and produce a product.

US 2010/222910 A1 discloses a system for production planning that relies on the developing factory shop floor modeling.

JP H09 179604 A discloses a plant operation control system configured to produce products within a plant using energy produced by energy production means, set a energy production schedule based on a product production schedule, adjust the energy production schedule based on energy-related information, and output the energy outside the plant according to the adjusted schedule.

### [Summary of Invention]

### [Technical Problem]

When an unskilled designer of the equipment selects the operational condition of the equipment, Patent Literature 1 has a problem in that selection of the operational condition such that a variable expense of the equipment becomes low is difficult.

### [Solution to Problem]

The object above is achieved by the selection system defined by the appended claim 1. Further advantageous effects can be obtained by the preferred embodiments defined by append-ed dependent claims.

A selection system of a first reference example selects an operational condition of equipment in which a cost including a variable expense of the equipment is low. The selection system includes an input part, a first arithmetic part, a second arithmetic part, and a selecting part. The input part is used to input a restriction relating to an operation of the equipment, a spec of a product to be produced with the equipment, and a production quantity of the product. The first arithmetic part automatically executes a simulation of the operation of the equipment, and calculates a candidate of the operational condition satisfying the restriction, the spec, and the production quantity. The second arithmetic part calculates the variable expense when operating in accordance with the candidate, which is an arithmetic result of the first arithmetic part. The selecting part causes the first arithmetic part and the second arithmetic part to repeat the calculations. The selecting part automatically compares variable expenses each corresponding to a plurality of candidates, and selects a first operational condition, which is a candidate of the operational condition having a low variable expense, from among the plurality of candidates.

In the selection system of the first reference example, the selecting part causes the first arithmetic part and the second arithmetic part to repeat the calculations. The selecting part automatically compares variable expenses each corresponding to a plurality of candidates, and selects the first operational condition, which is a candidate of the operational condition having the low variable expense, from among the plurality of candidates. As a result, the selection system can select the operational condition such that the variable expense of the equipment becomes low, on behalf of the unskilled designer of the equipment.

A selection system of a second reference example is the selection system of the first reference example, the equipment including a rectifying tower which purifies a raw material and produces the product. The operational condition of the equipment includes at least one of a number of stages, an operating pressure, a raw material feeding stage, and a reflux volume, of the rectifying tower.

A selection system of a third reference example is the selection system of the second reference example, the equipment purifying the raw material by extractive distillation. The operational condition of the equipment further includes at least one of an extracting agent feeding stage and an extracting agent flow rate of the rectifying tower.

A selection system of a fourth reference example is the selection system of the first reference example, the equipment including a rectifying tower which purifies a raw material, a heater mounted on a tower bottom part in the rectifying tower, and a cooler mounted on a tower top part in the rectifying tower. The variable expense includes an expense relating to the raw material and utility expenses of the heater and the cooler.

A selection system of a fifth reference example is the selection system of the fourth reference example, the equipment purifying the raw material by extractive distillation. The equipment further includes an extracting agent cooler which cools an extracting agent. The variable expense further includes an expense relating to the extracting agent and a utility expense of the extracting agent cooler.

A selection system of a sixth reference example is the selection system of any one of the first reference example to the fifth reference example, the cost being the variable expense of the equipment, which is existing. The input part is further used to input a specification of the equipment.

A selection system of a seventh reference example is the selection system of any one of the first reference example to the fifth reference example, the cost being an equipment introduction cost required for introduction of the equipment and the variable expense of the equipment. The first arithmetic part automatically executes the simulation of the operation of the equipment, and calculates a candidate of the operational condition satisfying the restriction, the spec, and the production quantity, and a candidate of a specification of the equipment satisfying the restriction, the spec, and the production quantity. The second arithmetic part calculates the equipment introduction cost and the variable expense when operating in accordance with the candidate, which is an arithmetic result of the first arithmetic part. The selecting part causes the first arithmetic part and the second arithmetic part to repeat the calculations. The selecting part automatically compares equipment introduction costs and variable expenses each corresponding to a plurality of candidates, and selects a second operational condition, which is a candidate of the operational condition, and a first specification of the equipment, which is a candidate of the specification of the equipment, having a low total of the equipment introduction cost and the variable expense from among the plurality of candidates.

In the selection system of the seventh reference example, the selecting part causes the first arithmetic part and the second arithmetic part to repeat the calculations. The selecting part automatically compares equipment introduction costs and variable expenses each corresponding to a plurality of candidates, and selects the second operational condition, which is a candidate of the operational condition, and the first specification of the equipment, which is a candidate of the specification of the equipment, having a low total of the equipment introduction cost and the variable expense from among the plurality of candidates. As a result, the selection system can select the operational condition such that the equipment introduction cost and the variable expense become low, on behalf of the unskilled designer of the equipment.

A selection system of an eighth reference example is the selection system of any one of the first reference example to the seventh reference example, the input part being used to input a plurality of input items regarding the restriction, the spec, and the production quantity. The plurality of input items include an essential input item and an optional input item.

A selection system of a ninth reference example is the selection system of the eighth reference example, the input part is further used to input a type of the equipment. The input part changes the essential input item regarding the restriction in accordance with the type of the equipment, which is input.

A selection system of a tenth reference example is the selection system of any one of the first reference example to the ninth reference example, the selecting part selecting the first operational condition with an optimization algorithm for updating the operational condition such that the variable expense becomes low.

### [Brief Description of Drawings]

[Figure 1] Figure 1 is a schematic configuration diagram of equipment.
[Figure 2] Figure 2 is a functional block diagram of a selection system.
[Figure 3] Figure 3 is a diagram showing an overview of a computing process of an objective function in a first embodiment.
[Figure 4] Figure 4 is a diagram showing an example of a type of the equipment.
[Figure 5] Figure 5 is a flow chart for describing an example of processing of the selection system in the first embodiment.
[Figure 6] Figure 6 is a diagram showing an overview of the computing process of the objective function in a modification 1B.
[Figure 7] Figure 7 is a flow chart for describing an example of the processing of the selection system in the modification 1B.
[Figure 8] Figure 8 is a diagram showing an overview of the computing process of the objective function in a second embodiment.
[Figure 9] Figure 9 is a flow chart for describing an example of the processing of the selection system in the second embodiment.
[Figure 10] Figure 10 is a diagram showing an overview of the computing process of the objective function in a modification 2B.
[Figure 11] Figure 11 is a flow chart for describing an example of the processing of the selection system in the modification 2B.
[Figure 12] Figure 12 is a schematic configuration diagram of equipment purifying a raw material by extractive distillation.
[Figure 13] Figure 13 is a diagram showing an example of a type of the equipment purifying the raw material by extractive distillation.

### [Description of Embodiment]

### <First Embodiment>

### (1) Overall configuration

A selection system 1 selects an operational condition of equipment 10 such that the cost of the equipment 10 becomes minimum. Hereinafter, the equipment 10 and the selection system 1 will be described in detail.

### (2) Detailed configuration

### (2-1) Equipment

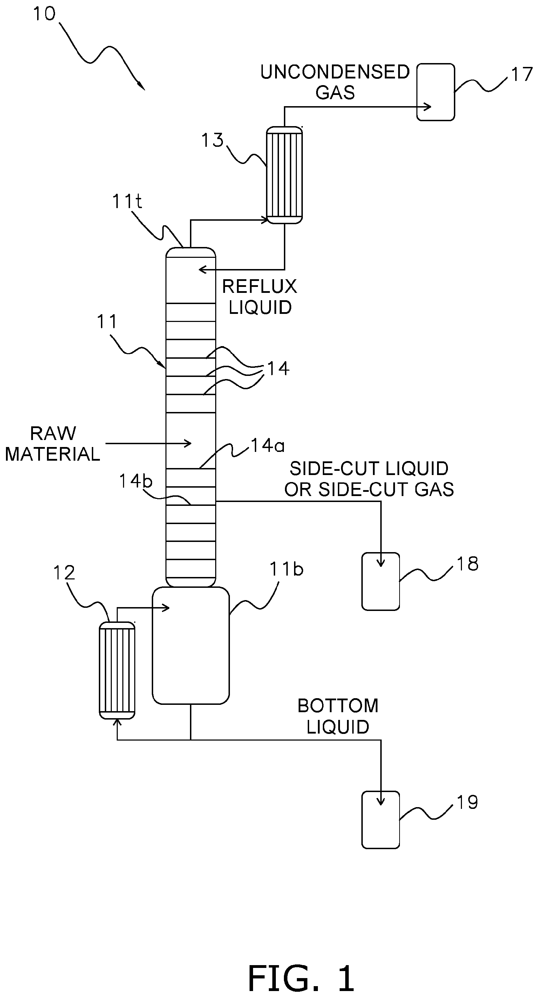

The equipment 10 produces a target product by purifying a raw material by distillation. The product may be, for example, a refrigerant (R32, R125, R22, R134a, R143a, R1234yf, R1234ze, R1233zd, E-1132, 1123, 152a), an etchant (R23, R14, R41, R116, C318, HF), a monomer (TFE, HFP (CF3CF = CF2), VDF (CF2 = CH2)), a chemical product (IF5, C3VE (CF3OCF = CF2)), etc., which are used in a refrigeration cycle apparatus. Figure 1 is a schematic configuration diagram of the equipment 10. As shown in Figure 1, the equipment 10 mainly has a rectifying tower 11, a reboiler 12 (heater), and a condenser 13 (cooler). The equipment 10 is existing equipment.

The rectifying tower 11 purifies the raw material by distillation. In other words, the rectifying tower 11 separates a plurality of compounds having different boiling points included in the raw material. A plurality of stages 14 are formed inside the rectifying tower 11. One of the plurality of stages 14 is a raw material feeding stage 14a for supplying a raw material into the rectifying tower 11. In addition, one of the plurality of stages 14 is a side-cut stage 14b for taking out a side-cut liquid or a side-cut gas from the rectifying tower 11. The side-cut liquid or the side-cut gas taken out from the side-cut stage 14b is stored in a side cut tank 18.

The reboiler 12 is mounted on a tower bottom part 11b of the rectifying tower 11. The reboiler 12 allows heat exchange between the raw material and a heating medium to heat the raw material.

The condenser 13 is mounted on a tower top part 11t of the rectifying tower 11. The condenser 13 allows heat exchange between the raw material, which turned into steam, and the heating medium, to cool the steam. The condenser 13 is a vertical condenser.

Once a raw material is supplied to the raw material feeding stage 14a inside the rectifying tower 11, a part of the supplied raw material accumulates in the tower bottom part 11b, and the remaining flows out from the tower bottom part 11b. A part of the raw material flowed out from the tower bottom part 11b is stored in a bottom tank 19 as a bottom liquid, and the remaining flows into the reboiler 12. The raw material flowed into the reboiler 12 turns into steam by being heated with the heating medium. The steam flows into the tower bottom part 11b, and rises while being brought into counterflow contact with the raw material, resulting in flowing out from the tower top part 11t. The steam flowed out from the tower top part 11t flows into the condenser 13. The steam flowed into the condenser 13 is cooled with the heating medium and turns into a condensate liquid or an uncondensed gas, then flows out from the condenser 13. A part of the condensate liquid flowed out from the condenser 13 flows into the rectifying tower 11 as a reflux liquid, and the remaining is stored in a distillate tank 17 as a distillate or an uncondensed gas.

### (2-2) Selection system

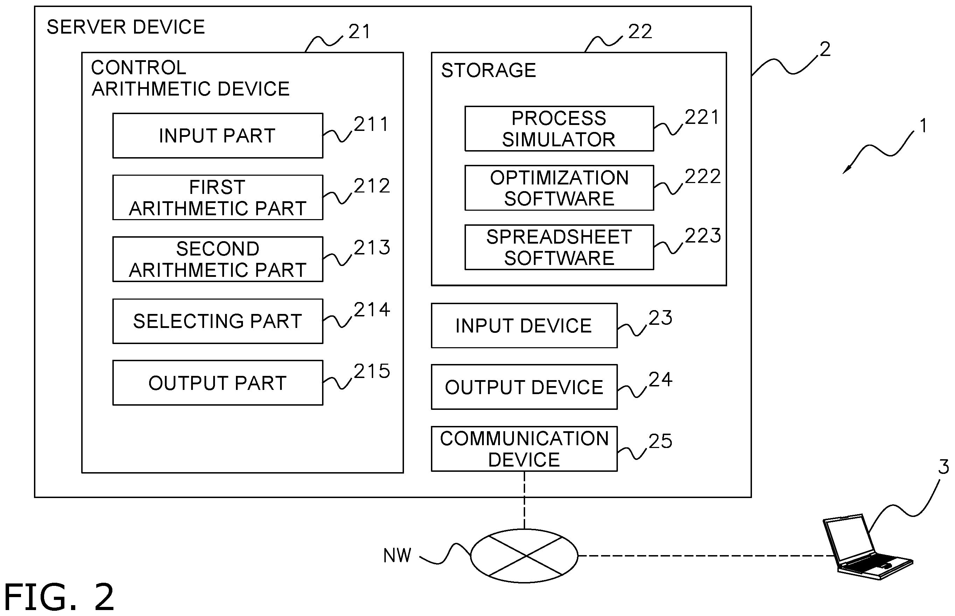

Figure 2 is a functional block diagram of the selection system 1. As shown in Figure 2, the selection system 1 has a server device 2 and a user terminal 3. The server device 2 and the user terminal 3 are communicably connected with each other through a network NW. The network NW is, for example, the Internet, LAN, WAN, etc.

### (2-2-1) Server device

Based on an input from the user terminal 3, the server device 2 selects an operational condition of the equipment 10 such that a predetermined restricting condition is satisfied, and the cost of the equipment 10 becomes minimum. In other words, the server device 2 is a device for solving an optimization problem, which sets the cost of the equipment 10 as an objective function, and selects an operational condition of the equipment 10 such that a predetermined restricting condition is satisfied, and the value of the objective function becomes minimum.

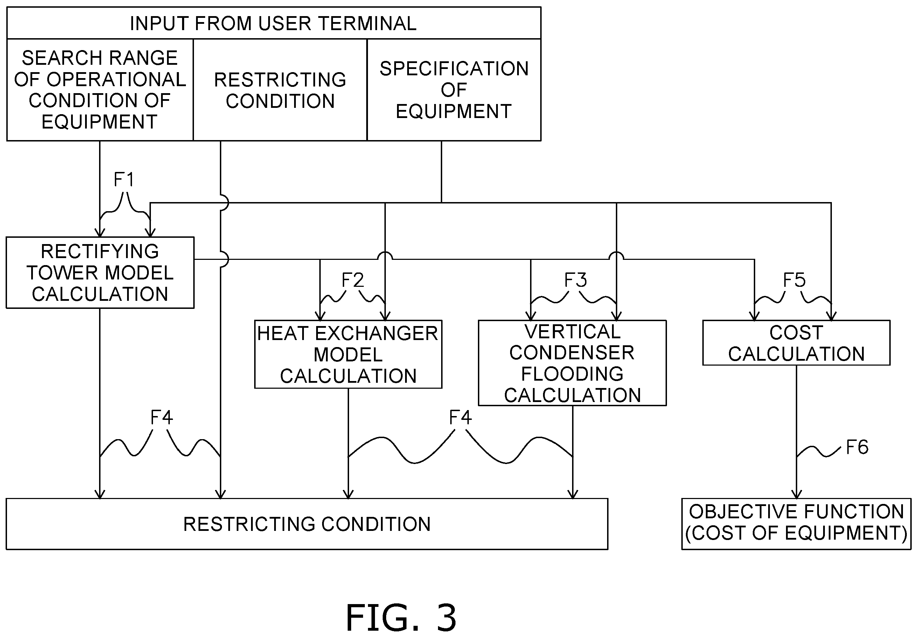

Figure 3 is a diagram showing an overview of a computing process of the objective function in the present embodiment. Figure 3 shows the computing process of the objective function when one operational condition of the equipment 10, which is a variable in the optimization problem, is selected from a search range of the operational condition of the equipment 10. The operational condition of the equipment 10 is automatically selected from the search range with an optimization algorithm.

As shown in a flow F1, the server device 2 calculates a model of the rectifying tower 11 (hereinafter, may be described as the rectifying tower model calculation) based on the operational condition of the equipment 10 selected from the search range and a specification of the equipment 10 included in the input from the user terminal 3. Upon completing the rectifying tower model calculation, as shown in a flow F2, the server device 2 calculates a model of the heat exchanger (the reboiler 12 and the condenser 13) (hereinafter, may be described as the heat exchanger model calculation) based on an output of the rectifying tower model calculation and the specification of the equipment 10. Upon completing the heat exchanger model calculation, as shown in a flow F3, the server device 2 calculates a flooding of the condenser 13 (hereinafter, may be described as the vertical condenser flooding calculation) based on the output of the rectifying tower model calculation and the specification of the equipment 10. The vertical condenser flooding calculation is a calculation required for the condenser 13 to be a vertical condenser. Upon completing the vertical condenser flooding calculation, as shown in a flow F4, the server device 2 determines whether outputs of the rectifying tower model calculation, the heat exchanger model calculation, and the vertical condenser flooding calculation satisfy a restricting condition included in the input from the user terminal 3. If the restricting condition is satisfied, as shown in a flow F5, the server device 2 calculates a cost of the equipment 10 (hereinafter, may be described as the cost calculation) based on the output of the rectifying tower model calculation and the specification of the equipment 10. Upon completing the cost calculation, as shown in a flow F6, the server device 2 uses an output of the cost calculation as the value of the objective function corresponding to the selected operational condition of the equipment 10.

As shown in Figure 2, the server device 2 has a control arithmetic device 21, a storage 22, an input device 23, an output device 24, and a communication device 25. The control arithmetic device 21 is a processor such as a CPU and a GPU. The storage 22 is a storage medium such as an RAM, an ROM, and an HDD. The control arithmetic device 21 reads out a program for realizing functional blocks and the like stored on the storage 22, and performs predetermined arithmetic processing according to the program. Furthermore, according to the program, the control arithmetic device 21 can write an arithmetic result in the storage 22, or read out information stored on the storage 22. In the present embodiment, the storage 22 particularly stores a process simulator 221, which will be described later, an optimization software 222, and a general spreadsheet software 223. The input device 23 is, for example, a keyboard, a mouse, etc. The output device 24 is, for example, a monitor. The communication device 25 is a network interface device for carrying out communication with the user terminal 3 through the network NW.

As shown in Figure 2, the control arithmetic device 21 has an input part 211, a first arithmetic part 212, a second arithmetic part 213, and a selecting part 214 as main functional blocks.

### (2-2-1-1) Input part

The input part 211 causes a user to input, through the user terminal 3, a restriction relating to an operation of the equipment 10, a spec of a product to be produced with the equipment 10, and a production quantity of the product to be produced with the equipment 10. The restriction relating to the operation of the equipment 10, the spec of the product to be produced with the equipment 10, and the production quantity of the product to be produced with the equipment 10 correspond to the restricting condition in the optimization problem. In the present embodiment, the restriction relating to the operation of the equipment 10 includes an upper limit of a flooding rate of the rectifying tower 11, which is the output of the rectifying tower model calculation, a lower limit (an outlet temperature of the heating medium of the condenser 13) of an outlet temperature (hereinafter, may be described as the top temperature of the rectifying tower 11) of a rectified fluid of the condenser 13, which is the output of the rectifying tower model calculation, an upper limit of the temperature of the tower bottom part 11b in the rectifying tower 11, which is the output of the rectifying tower model calculation, a lower limit of a margin ratio of a heat transfer area in the condenser 13, which is the output of the heat exchanger model calculation, and an upper limit of a flooding rate of the condenser 13, which is the output of the vertical condenser flooding calculation. The spec of the product includes a compound name of the product, a purity of the product, an impurity concentration of the product, a recovered quantity of the product, a recovery rate of the product, a loss flow rate of the product, a loss rate of the product, etc. The production quantity of the product includes a target production quantity, etc., of each product component. The input part 211 is used to input a plurality of input items regarding the restriction relating to the operation of the equipment 10, the spec of the product, and the production quantity of the product. The plurality of input items may include an essential input item and an optional input item.

In addition, the input part 211 causes the user to input a specification of the equipment 10 through the user terminal 3. In the present embodiment, the specification of the equipment 10 includes a raw material feeding condition (quantity/formulation, pressure, and temperature), a current operation pressure, a number of stages of the rectifying tower 11, a tower diameter of the rectifying tower 11, a packed length of the rectifying tower 11, a specification (material, type, etc.) of a packed object in the rectifying tower 11, a specification of the condenser 13, an inlet pressure of the condenser 13, an inlet temperature of the heating medium of the condenser 13, an outlet temperature of the heating medium of the condenser 13, a dirt coefficient in each side of a Shell and a Tube of the condenser 13, a film heat transfer coefficient in each side of the Shell and the Tube of the condenser 13, a specification of the Tube of the condenser 13, a marginal expense of the product, annual operation hours, and a utility expense of each instrument. The specification of the equipment 10 may further include a type of the heating medium of the reboiler 12, and a type of the heating medium of the condenser 13.

In addition, the input part 211 causes the user to input a search range of the operational condition of the equipment 10 through the user terminal 3 to efficiently solve the optimization problem. The operational condition of the equipment 10 includes at least one of the number of stages of the rectifying tower 11, the operating pressure of the rectifying tower 11, the raw material feeding stage 14a of the rectifying tower 11, and a reflux volume of the rectifying tower 11. The operational condition of the equipment 10 may further include a distilling amount, etc., of the rectifying tower 11.

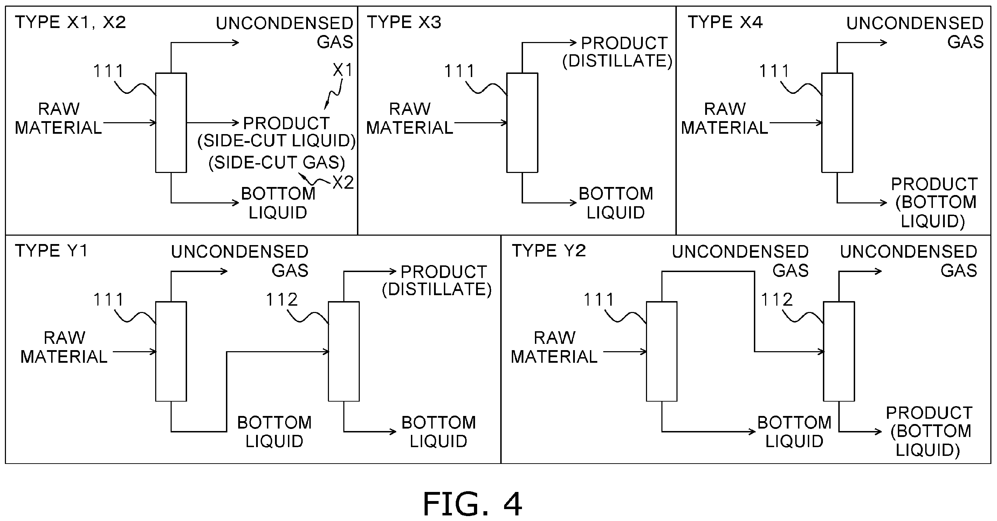

In addition, the input part 211 causes the user to input a type of the equipment 10 through the user terminal 3. Figure 4 is a diagram showing an example of the type of the equipment 10. The input part 211, for example, is used to input one type of the equipment 10 from among 5 types of the equipment 10, which are types X1 to X4, Y1, and Y2, shown in Figure 4. The type X1 supplies a raw material to a rectifying tower 111, and takes out an uncondensed gas, a side-cut liquid to be the product, and a bottom liquid from the rectifying tower 111. The type X2 supplies a raw material to the rectifying tower 111, and takes out an uncondensed gas, a side-cut gas to be the product, and a bottom liquid from the rectifying tower 111. The type of the equipment 10 shown in Figure 1 corresponds to the type X1 or the type X2. The type X3 supplies a raw material to the rectifying tower 111, and takes out a distillate to be the product and a bottom liquid from the rectifying tower 111. The type X4 supplies a raw material to the rectifying tower 111, and takes out an uncondensed gas and a bottom liquid to be the product from the rectifying tower 111. The types Y1, Y2 have two rectifying towers 111, 112. The type Y1 supplies a raw material to the rectifying tower 111, and takes out an uncondensed gas and a bottom liquid from the rectifying tower 111. Furthermore, the type Y1 supplies the bottom liquid taken out from the rectifying tower 111 to the rectifying tower 112, and takes out a distillate to be the product and a bottom liquid from the rectifying tower 112. The type Y2 supplies a raw material to the rectifying tower 111, and takes out an uncondensed gas and a bottom liquid from the rectifying tower 111. Furthermore, the type Y2 supplies the uncondensed gas taken out from the rectifying tower 111 to the rectifying tower 112, and takes out an uncondensed gas and a bottom liquid to be the product from the rectifying tower 112. The input part 211 changes the input items of the operational condition of the equipment 10, the restricting condition, and the specification of the equipment 10 in accordance with the input type of the equipment 10. In particular, the input part 211 changes the essential input item regarding the restriction relating to the operation of the equipment 10 in accordance with the input type of the equipment 10.

### (2-2-1-2) First arithmetic part

The first arithmetic part 212 automatically executes a simulation of the operation of the equipment 10, and calculates a candidate of the operational condition of the equipment 10 satisfying the restricting condition (the restriction relating to the operation of the equipment 10, the spec of the product to be produced with the equipment 10, and the production quantity of the product to be produced with the equipment 10).

Firstly, the first arithmetic part 212 performs the rectifying tower model calculation. Specifically, the first arithmetic part 212 inputs the operational condition of the equipment 10 selected from the search range, and the specification of the equipment 10, to the process simulator 221, and outputs a spec of the product, a production quantity of the product, an exchanged heat quantity of the reboiler 12, an exchanged heat quantity of the condenser 13, a flooding rate of the rectifying tower 11, a physical property of a rectified fluid of the condenser 13 (a flow rate, a specific weight, and a viscosity of a vapor phase in the tower top part 11t of the rectifying tower 11/a flow rate, a specific weight, a viscosity, and a surface tension of a liquid phase flowing out from the condenser 13), a top temperature of the rectifying tower 11, a temperature of the tower bottom part 11b in the rectifying tower 11, a formulation distribution inside the rectifying tower 11, a temperature distribution inside the rectifying tower 11, a material balance, etc. (corresponding to the flow F1 in Figure 3). At this time, the specification of the equipment 10 input to the process simulator 221 includes the raw material feeding condition (quantity/formulation, pressure, and temperature), the current operation pressure, the number of stages of the rectifying tower 11, the tower diameter of the rectifying tower 11, the packed length of the rectifying tower 11, and the specification of the packed object of the rectifying tower 11. The process simulator 221 uses a process simulation tool such as, for example, PRO/II or ASPEN.

Next, the first arithmetic part 212 performs the heat exchanger model calculation. Specifically, the first arithmetic part 212 inputs the output of the rectifying tower model calculation and the specification of the equipment 10 to the process simulator 221, and outputs a logarithmic mean temperature difference of the reboiler 12, a margin ratio of a heat transfer area in the condenser 13, a required heat transfer coefficient of the condenser 13, an inlet temperature of the rectified fluid of the condenser 13, an outlet temperature of the rectified fluid of the condenser 13, a logarithmic mean temperature difference of the condenser 13, etc. (corresponding to the flow F2 in Figure 3). At this time, the output of the rectifying tower model calculation input to the process simulator 221 includes the exchanged heat quantity of the reboiler 12 and the exchanged heat quantity of the condenser 13. The specification of the equipment 10 input to the process simulator 221 includes the specification of the condenser 13, the inlet pressure of the condenser 13, the inlet temperature of the heating medium of the condenser 13, the outlet temperature of the heating medium of the condenser 13, the dirt coefficient in each side of the Shell and the Tube of the condenser 13, and the film heat transfer coefficient in each side of the Shell and the Tube of the condenser 13.

Next, the first arithmetic part 212 performs the vertical condenser flooding calculation. Specifically, the first arithmetic part 212 uses, for example, the spreadsheet software 223, to compute a flooding rate, etc. of the condenser 13 from the output of the rectifying tower model calculation and the specification of the equipment 10 with a predetermined relational expression (corresponding to the flow F3 in Figure 3). At this time, the output of the rectifying tower model calculation input to the predetermined relational expression includes the physical property of the rectified fluid of the condenser 13. The specification of the equipment 10 input to the predetermined relational expression includes the specification of the Tube of the condenser 13.

Next, the first arithmetic part 212 determines whether the outputs of the rectifying tower model calculation, the heat exchanger model calculation, and the vertical condenser flooding calculation satisfy the restricting condition (corresponding to the flow F4 in Figure 3). Specifically, the first arithmetic part 212 determines whether the flooding rate of the rectifying tower 11, which is the output of the rectifying tower model calculation, the top temperature of the rectifying tower 11, which is the output of the rectifying tower model calculation, the temperature of the tower bottom part 11b in the rectifying tower 11, which is the output of the rectifying tower model calculation, the margin ratio of the heat transfer area in the condenser 13, which is the output of the heat exchanger model calculation, and the flooding rate of the condenser 13, which is the output of the vertical condenser flooding calculation, satisfy the upper limit of the flooding rate of the rectifying tower 11, the lower limit of the top temperature of the rectifying tower 11, the upper limit of the temperature of the tower bottom part 11b in the rectifying tower 11, the lower limit of the margin ratio of the heat transfer area in the condenser 13, and the upper limit of the flooding rate of the condenser 13 in the restricting condition included in the input from the user terminal 3, respectively. In addition, the first arithmetic part 212 determines whether the spec of the product and the production quantity of the product, which are the output of the rectifying tower model calculation, satisfy the spec of the product and the production quantity of the product in the restricting condition included in the input from the user terminal 3, respectively. If the outputs of the rectifying tower model calculation, the heat exchanger model calculation, and the vertical condenser flooding calculation satisfy the restricting condition, the first arithmetic part 212 outputs the operational condition of the equipment 10 used in the rectifying tower model calculation. If the outputs of the rectifying tower model calculation, the heat exchanger model calculation, and the vertical condenser flooding calculation do not satisfy the restricting condition, the first arithmetic part 212 performs the rectifying tower model calculation, the heat exchanger model calculation, and the vertical condenser flooding calculation using the operational condition of the equipment 10 newly selected from the search range, until the restricting condition is satisfied.

### (2-2-1-3) Second arithmetic part

The second arithmetic part 213 uses, for example, the spreadsheet software 223, to calculate the cost of the equipment 10 when operating in accordance with the candidate of the operational condition of the equipment 10, which is an arithmetic result of the first arithmetic part 212. In the present embodiment, the cost of the equipment 10 is a variable expense of the equipment 10. The variable expense includes an expense relating to the raw material, and an expense of utilities of the reboiler 12 and the condenser 13. The expense relating to the raw material is, for example, an expense of the product itself, a loss expense of the product, etc.

The second arithmetic part 213 performs the cost calculation. Specifically, the second arithmetic part 213 computes the variable expense of the equipment 10 from the output of the rectifying tower model calculation and the specification of the equipment 10 with a predetermined relational expression (corresponding to the flows F5, F6 in Figure 3). In the present embodiment, the variable expense is computed by "an annual raw material loss + an annually consumed utility expense". The annual raw material loss is computed by "a marginal expense of the product × a loss flow rate of the product × annual operation hours". The annually consumed utility expense is automatically calculated from the result of a heat quantity calculation of the rectifying tower model calculation. The annually consumed utility expense includes an annually consumed steam bill of the reboiler 12 and an annually consumed electrical bill of the condenser 13. In addition, the marginal expense of the product and the annual operation hours are included in the specification of the equipment 10.

### (2-2-1-4) Selecting part

The selecting part 214 causes the first arithmetic part 212 and the second arithmetic part 213 to repeat the calculations. The selecting part 214 automatically compares costs each corresponding to a plurality of candidates, and selects a first operational condition, which is a candidate of the operational condition having a low cost, from among the plurality of candidates. The selecting part 214 selects the first operational condition such that the cost becomes low, with an optimization algorithm for updating the operational condition.

Specifically, the selecting part 214 inputs, to the optimization software 222, the operational condition of the equipment 10 (the variable in the optimization problem) calculated by the first arithmetic part 212, and the cost of the equipment 10 (the objective function in the optimization problem) corresponding to the operational condition calculated by the second arithmetic part 213. The selecting part 214 selects an operational condition of the equipment 10 within the search range expected to achieve a smaller value of the objective function, which is output from the optimization software 222 every time an input is made to the optimization software 222, as a new candidate of the operational condition of the equipment 10. The optimization software 222 may be, for example, a commercially available tool such as modeFRONTIER, Optimus, and Isight. As the optimization algorithm, for example, a general optimization algorithm adopting a global searching technique such as a genetic algorithm or a local searching technique such as a gradient method is used.

### (2-2-1-5) Output part

An output part 215 outputs, to the user terminal 3, an optimal operational condition of the equipment 10 corresponding to the smallest value of the objective function selected with the selecting part 214. The output part 215 may further output, to the user terminal 3, an output of the rectifying tower model calculation, an output of the heat exchanger model calculation, an output of the vertical condenser flooding calculation, and an output of the cost calculation using the optimal operational condition of the equipment 10.

### (2-2-2) User terminal

The user terminal 3 is a general personal computer. The user terminal 3 has a processor such as a CPU or a GPU, and a storage such as an RAM, an ROM, or an HDD. The user terminal 3 also has a keyboard, a mouse, and the like for inputting information. The user terminal 3 also has a display for displaying information. The user terminal 3 also has a network interface device for connecting to the network NW. The user terminal 3 is also installed with a WEB browser and a general application such as a mailer.

The user accesses the server device 2 from the user terminal 3 via the network NW, and inputs the specification of the equipment 10, and the like. In addition, the user terminal 3 displays the optimal operational condition of the equipment 10 and the like, which are output from the server device 2.

### (3) Processing

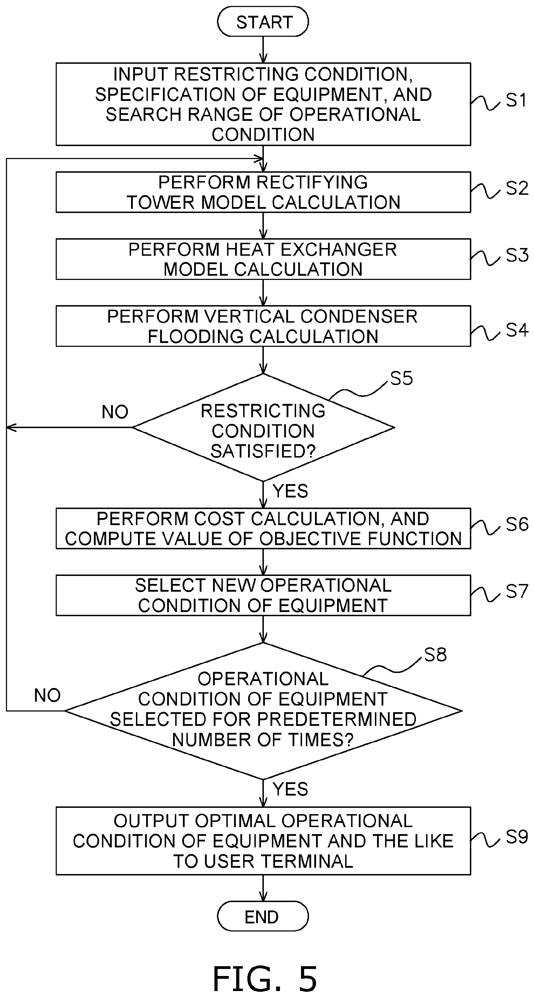

An example of the processing of the selection system 1 in the present embodiment will be described using the flow chart of Figure 5.

As shown in step S1, the selection system 1 causes the user to input a type of the equipment 10 through the user terminal 3, and further input a restricting condition, a specification of the equipment 10, and a search range of an operational condition of the equipment 10 in accordance with the type of the equipment 10.

Upon completing step S1, as shown in step S2, the selection system 1 performs the rectifying tower model calculation based on the operational condition of the equipment 10 selected from the search range and the specification of the equipment 10.

Upon completing step S2, as shown in step S3, the selection system 1 performs the heat exchanger model calculation based on an output of the rectifying tower model calculation and the specification of the equipment 10.

Upon completing step S3, as shown in step S4, the selection system 1 performs the vertical condenser flooding calculation based on the output of the rectifying tower model calculation and the specification of the equipment 10. Note that the selection system 1 may perform the heat exchanger model calculation in step S3 and the vertical condenser flooding calculation in step S4 in parallel.

Upon completing step S4, as shown in step S5, the selection system 1 determines whether outputs of the rectifying tower model calculation, the heat exchanger model calculation, and the vertical condenser flooding calculation satisfy the restricting condition. If the restricting condition is satisfied, the processing advances to step S6. If the restricting condition is not satisfied, the processing returns to step S2, and the selection system 1 uses the operational condition of the equipment 10 newly selected from the search range to perform the rectifying tower model calculation, the heat exchanger model calculation, and the vertical condenser flooding calculation.

Upon advancing from step S5 to step S6, the selection system 1 performs the cost calculation of the equipment 10 based on the output of the rectifying tower model calculation and the specification of the equipment 10, and uses an output of the cost calculation as a value of the objective function.

Upon completing step S6, as shown in step S7, the selection system 1 inputs the operational condition of the equipment 10, and a value of the objective function corresponding to the operational condition, to the optimization software 222, and selects an operational condition of the equipment 10 within the search range expected to achieve a smaller value of the objective function, which is output from the optimization software 222, as a new candidate of the operational condition of the equipment 10.

Upon completing step S7, as shown in step S8, the selection system 1 determines whether the operational condition of the equipment 10 is selected for a predetermined number of times using the optimization software 222. If the operational condition of the equipment 10 is selected for the predetermined number of times, the processing advances to step S9. If the operational condition of the equipment 10 is not selected for the predetermined number of times, the processing returns to step S2, and the selection system 1 uses the operational condition of the equipment 10 selected using the optimization software 222 to perform the rectifying tower model calculation, the heat exchanger model calculation, and the vertical condenser flooding calculation.

Upon advancing from step S8 to step S9, the selection system 1 outputs, to the user terminal 3, an optimal operational condition of the equipment 10 and the like corresponding to the smallest value of the objective function.

### (4) Feature

(4-1)
Conventionally, there has been a technique in which a designer of equipment such as a rectifying tower selects an operational condition of the equipment, and a target product is produced. When an unskilled designer of the equipment selects the operational condition of the equipment, in the conventional art, there has been a problem in that selection of the operational condition such that a variable expense of the equipment becomes low is difficult. In addition, even when a skilled designer of the equipment selects the operational condition of the equipment, there is a problem in that selection of the operational condition such that the variable expense of the equipment becomes minimum is difficult.

The selection system 1 of the present embodiment selects an operational condition of the equipment 10 in which a cost including a variable expense of the equipment 10 is low. The selection system 1 includes the input part 211, the first arithmetic part 212, the second arithmetic part 213, and the selecting part 214. The input part 211 is used to input a restriction relating to an operation of the equipment 10, a spec of a product to be produced with the equipment 10, and a production quantity of the product. The first arithmetic part 212 automatically executes a simulation of the operation of the equipment 10, and calculates a candidate of the operational condition satisfying the restriction relating to the operation of the equipment 10, the spec of the product to be produced with the equipment 10, and the production quantity of the product to be produced with the equipment 10. The second arithmetic part 213 calculates a variable expense when operating in accordance with the candidate, which is an arithmetic result of the first arithmetic part 212. The selecting part 214 causes the first arithmetic part 212 and the second arithmetic part 213 to repeat the calculations. The selecting part 214 automatically compares variable expenses each corresponding to a plurality of candidates, and selects a first operational condition, which is a candidate of the operational condition having a low variable expense, from among the plurality of candidates.

In the selection system 1 of the present embodiment, the selecting part 214 causes the first arithmetic part 212 and the second arithmetic part 213 to repeat the calculations. The selecting part 214 automatically compares the variable expenses each corresponding to the plurality of candidates, and selects the first operational condition, which is a candidate of the operational condition having a low variable expense, from among the plurality of candidates. As a result, the selection system 1 can select an operational condition such that the variable expense of the equipment 10 becomes low, on behalf of the unskilled designer of the equipment 10. In addition, the selection system 1 can select an operational condition such that the variable expense of the equipment 10 becomes minimum, on behalf of the skilled designer of the equipment 10.
(4-2) In the selection system 1 of the present embodiment, the equipment 10 includes the rectifying tower 11, which purifies a raw material and produces a product. An operational condition of the equipment 10 includes at least one of a number of stages of the rectifying tower 11, an operating pressure of the rectifying tower 11, the raw material feeding stage 14a of the rectifying tower 11, and a reflux volume of the rectifying tower 11.
(4-3) In the selection system 1 of the present embodiment, the equipment 10 includes the rectifying tower 11 purifying a raw material, the reboiler 12 mounted on the tower bottom part 11b in the rectifying tower 11, and the condenser 13 mounted on the tower top part 11t in the rectifying tower 11. A variable expense of the equipment 10 includes an expense relating to the raw material, and utility expenses of the reboiler 12 and the condenser 13.
(4-4) In the selection system 1 of the present embodiment, the cost is a variable expense of the existing equipment 10. The input part 211 is further used to input a specification of the equipment 10.
(4-5) In the selection system 1 of the present embodiment, the input part 211 is used to input a plurality of input items regarding the restriction relating to the operation of the equipment 10, the spec of the product to be produced with the equipment 10, and the production quantity of the product to be produced with the equipment 10. The plurality of input items include an essential input item and an optional input item.
(4-6) In the selection system 1 of the present embodiment, the input part 211 is further used to input a type of the equipment 10. The input part 211 changes the essential input item regarding the restriction relating to the operation of the equipment 10 in accordance with the input type of the equipment 10.
(4-7) In the selection system 1 of the present embodiment, the selecting part 214 selects the first operational condition such that the variable expense of the equipment 10 becomes low, with the optimization algorithm for updating the operational condition of the equipment 10.

### (5) Modification

### (5-1) Modification 1A

In the present embodiment, the server device 2 performs the rectifying tower model calculation. However, the server device 2 may add a simulation of a reaction process to the rectifying tower model calculation. The simulation of the reaction process computes, for example, a raw material feeding condition in the specification of the equipment 10, which is one input of the rectifying tower model calculation. In this case, the server device 2 selects an operational condition of the equipment 10 such that a total of a variable expense obtained from an output of the rectifying tower model calculation and a variable expense obtained from an output of the simulation of the reaction process becomes minimum.

Moreover, the server device 2 may select an operational condition of a reactor and the equipment 10 such that a total cost of the variable expense of the reactor and the variable expense of the rectifying tower 11 becomes minimum.

### (5-2) Modification 1B

In the present embodiment, the server device 2 determines whether the restricting condition is satisfied, and then computes a value of the objective function. However, the determination on whether the restricting condition is satisfied may be realized by including a term relating to the restricting condition to the objective function.

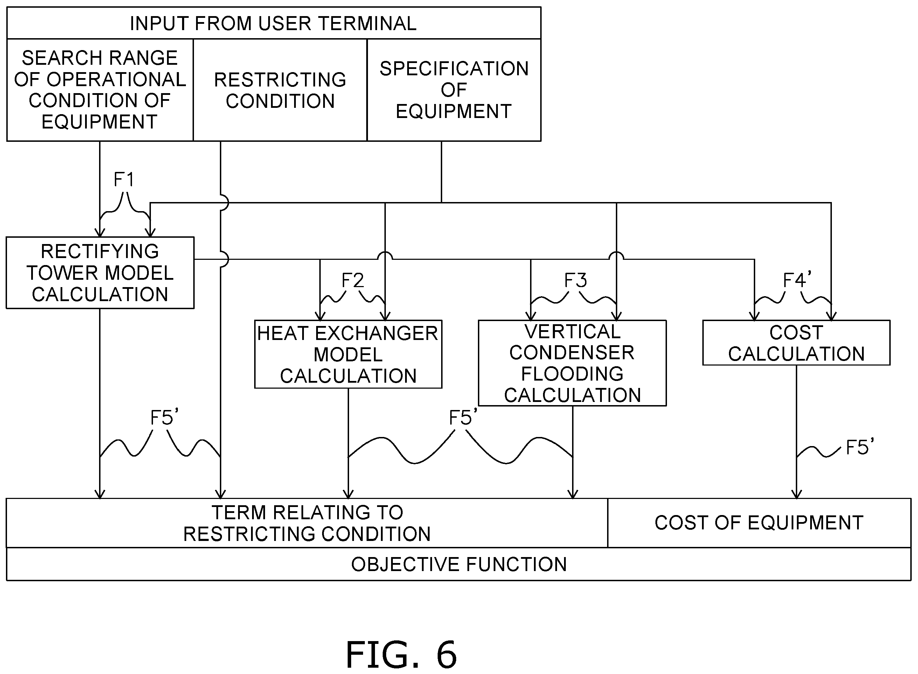

Figure 6 is a diagram showing an overview of a computing process of the objective function in the present modification. As shown in Figure 6, the objective function is a sum of the cost of the equipment 10 and the term relating to the restricting condition. Unlike Figure 3, upon completing the vertical condenser flooding calculation of the flow F3, as shown in a flow F4', the server device 2 performs the cost calculation based on the output of the rectifying tower model calculation and the specification of the equipment 10. Upon completing the cost calculation, as shown in a flow F5', the server device 2 substitutes the outputs of the rectifying tower model calculation, the heat exchanger model calculation, and the vertical condenser flooding calculation, and the restricting condition included in the input from the user terminal 3, into the term relating to the restricting condition of the objective function, and further substitutes the cost of the equipment 10, which is an output of the cost calculation, into the objective function, thereby computing a value of the objective function.

The term relating to the restricting condition is a sum of a term representing a restricting condition relating to the flooding rate of the rectifying tower 11, which is the output of the rectifying tower model calculation, a term representing a restricting condition relating to the top temperature of the rectifying tower 11, which is the output of the rectifying tower model calculation, a term representing a restricting condition relating to the temperature of the tower bottom part 11b in the rectifying tower 11, which is the output of the rectifying tower model calculation, a term representing a restricting condition relating to the margin ratio of the heat transfer area in the condenser 13, which is the output of the heat exchanger model calculation, a term representing a restricting condition relating to the flooding rate of the condenser 13, which is the output of the vertical condenser flooding calculation, a term representing a restricting condition relating to the spec of the product, and a term representing a restricting condition relating to the production quantity of the product. Each term in the term relating to the restricting condition is formed such that a value of the term itself becomes smaller as each restricting condition is satisfied. In other words, the more each term satisfies each restricting condition, the value of the objective function becomes smaller. For example, the term representing the restricting condition relating to the flooding rate of the rectifying tower 11 is formed such that the value of the term becomes smaller as the flooding rate of the rectifying tower 11, which is the output of the rectifying tower model calculation, falls within a stipulated range. Selecting such operational condition of the equipment 10 allowing the objective function to become the smallest corresponds to selecting an operational condition of the equipment 10 satisfying the restricting condition, while allowing the cost of the equipment 10 to become the smallest.

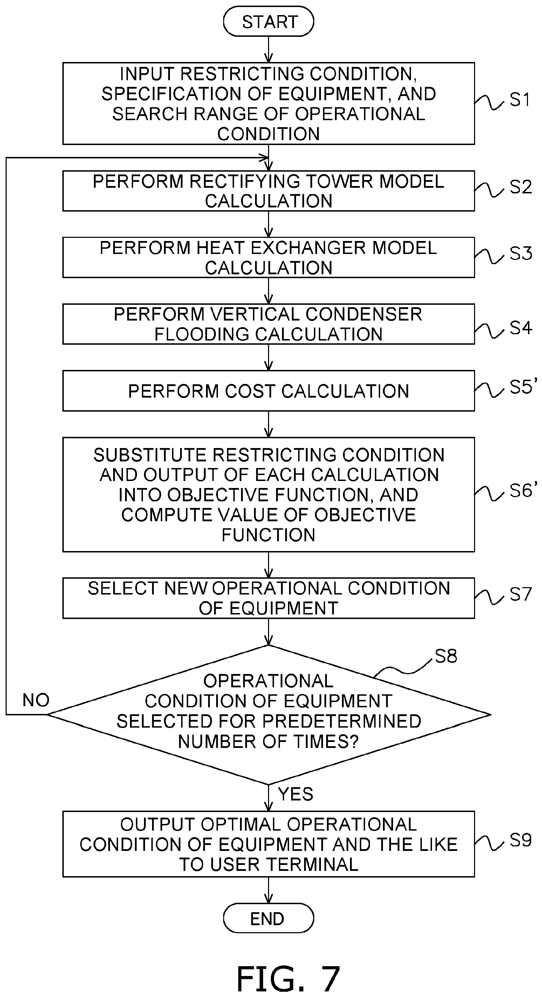

Figure 7 is a flow chart for describing an example of the processing of the selection system 1 in the present modification. Unlike Figure 5, upon completing step S4, as shown in step S5', the selection system 1 performs the cost calculation of the equipment 10 based on the output of the rectifying tower model calculation and the specification of the equipment 10. Upon completing step S5', as shown in step S6', the selection system 1 substitutes the outputs of the rectifying tower model calculation, the heat exchanger model calculation, the vertical condenser flooding calculation, and the cost calculation, and the restricting condition included in the input from the user terminal 3, into the objective function, thereby computing a value of the objective function.

### (5-3) Modification 1C

The equipment 10 may purify a raw material by extractive distillation, and produce a target product. Hereinafter, mainly parts different from the present embodiment will be described. Contents other than those described in the present modification are basically the same as those of the present embodiment.

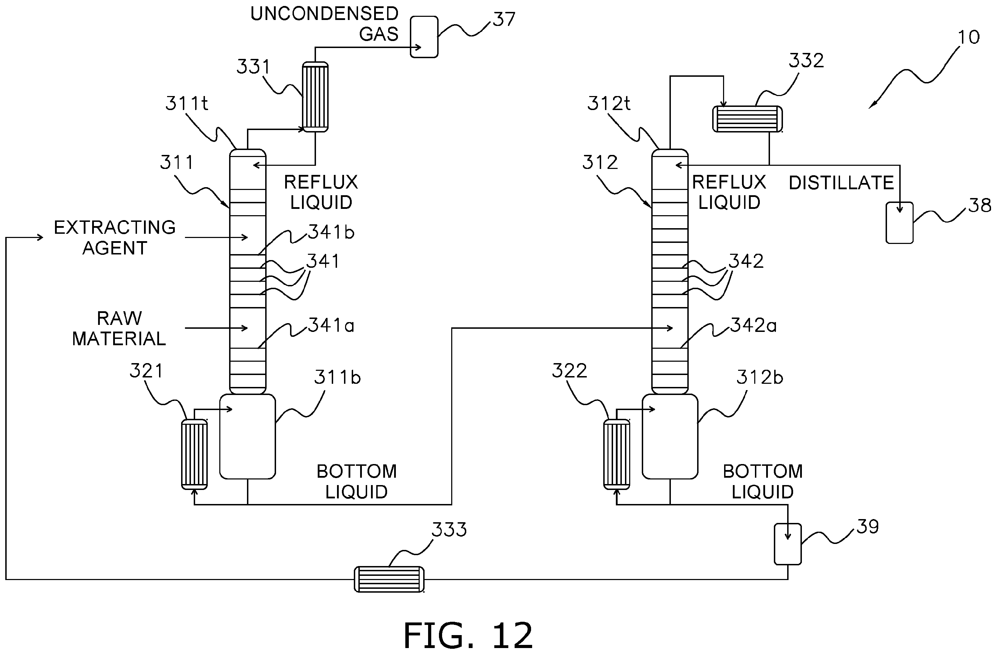

Figure 12 is a schematic configuration diagram of the equipment 10 purifying a raw material by extractive distillation. As shown in Figure 12, the equipment 10 mainly has rectifying towers 311, 312, reboilers 321, 322, condensers 331, 332, and a condenser 333 (extracting agent cooler).

A plurality of stages 341, 342 are formed inside the rectifying towers 311, 312. One of the plurality of stages 341 is a raw material feeding stage 341a for supplying the raw material into the rectifying tower 311. In addition, one of the plurality of stages 341 is an extracting agent feeding stage 341b for supplying an extracting agent into the rectifying tower 311. In addition, one of the plurality of stages 342 is a bottom liquid feeding stage 342a for supplying a bottom liquid flowing out from the rectifying tower 311 into the rectifying tower 312.

The reboiler 321 is mounted on a tower bottom part 311b in the rectifying tower 311. The reboiler 321 allows heat exchange between the raw material and the extracting agent, and the heating medium, thereby heating the raw material and the extracting agent.

The condenser 331 is mounted on a tower top part 311t in the rectifying tower 311. The condenser 331 allows heat exchange between the raw material, which turned into steam, and the heating medium, thereby cooling the steam. The condenser 331 is a vertical condenser.

Once the raw material is supplied to the raw material feeding stage 341a inside the rectifying tower 311, and the extracting agent is supplied to the extracting agent feeding stage 341b inside the rectifying tower 311, a part of the supplied raw material and extracting agent accumulates in the tower bottom part 311b, and the remaining flows out from the tower bottom part 311b. A part of the raw material and the extracting agent flowed out from the tower bottom part 311b flows into the bottom liquid feeding stage 342a inside the rectifying tower 312 as a bottom liquid, and the remaining flows into the reboiler 321. The raw material and the extracting agent flowed into the reboiler 321 are heated with the heating medium and turn into steam. The steam flows into the tower bottom part 311b, and rises while being brought into counterflow contact with the raw material and the extracting agent, then flows out from the tower top part 311t. The steam flowed out from the tower top part 311t flows into the condenser 331. The steam flowed into the condenser 331 is cooled with the heating medium and turns into a condensate liquid or an uncondensed gas, then flows out from the condenser 331. A part of the condensate liquid flowed out from the condenser 331 flows into the rectifying tower 311 as a reflux liquid, and the remaining is stored in a distillate tank 37 as a distillate or an uncondensed gas.

The reboiler 322 is mounted on a tower bottom part 312b in the rectifying tower 312. The reboiler 322 allows heat exchange between the raw material and the extracting agent, and the heating medium, thereby heating the raw material and the extracting agent.

The condenser 332 is mounted on a tower top part 312t of the rectifying tower 312. The condenser 332 allows heat exchange between the raw material, which turned into steam, and the heating medium, thereby cooling the steam.

Once the bottom liquid (the raw material and the extracting agent) flowed out from the rectifying tower 311 is supplied to the bottom liquid feeding stage 342a inside the rectifying tower 312, a part of the supplied raw material and extracting agent accumulates in the tower bottom part 312b, and the remaining flows out from the tower bottom part 312b. Among the raw material and the extracting agent flowed out from the tower bottom part 312b, the extracting agent is stored in a bottom tank 39 as a bottom liquid, and the raw material and the extracting agent flow into the reboiler 322. The raw material and the extracting agent flowed into the reboiler 322 are heated with the heating medium, and turn into steam. The steam flows into the tower bottom part 312b, and rises while being brought into counterflow contact with the raw material and the extracting agent, then flows out from the tower top part 312t. The steam flowed out from the tower top part 312t flows into the condenser 332. The steam flowed into the condenser 332 is cooled with the heating medium and turns into a condensate liquid or an uncondensed gas, then flows out from the condenser 332. A part of the condensate liquid flowed out from the condenser 332 flows into the rectifying tower 312 as a reflux liquid, and the remaining is stored in a distillate tank 38 as a distillate or an uncondensed gas.

The condenser 333 allows heat exchange between the extracting agent stored in the bottom tank 39, and the heating medium, thereby cooling the extracting agent. The cooled extracting agent is supplied to the extracting agent feeding stage 341b inside the rectifying tower 311. In other words, the equipment 10 supplies the extracting agent recovered from the rectifying tower 312 to the rectifying tower 311, and recycles the extracting agent.

### (5-3-1) Input part

The input part 211 causes the user to input a restriction relating to an operation of the equipment 10, a spec of a product to be produced with the equipment 10, and a production quantity of the product to be produced with the equipment 10, regarding the rectifying towers 311, 312, the reboilers 321, 322, and the condensers 331 to 333. In particular, the input part 211 is used to input a recovery purity of the extracting agent in the rectifying tower 312, and a recovery rate of the extracting agent in the rectifying tower 312, as the restriction relating to the operation of the equipment 10.

In addition, the input part 211 causes the user to input a specification of the equipment 10 regarding the rectifying towers 311, 312, the reboilers 321, 322, and the condensers 331 to 333. In particular, the input part 211 is used to input a temperature of the extracting agent to be supplied to the extracting agent feeding stage 341b inside the rectifying tower 311 as the specification of the equipment 10.

In addition, the input part 211 causes the user to input a search range of an operational condition of the equipment 10 regarding the rectifying towers 311, 312, the reboilers 321, 322, and the condensers 331 to 333. The operational condition of the equipment 10 further includes at least one of the extracting agent feeding stage 341b of the rectifying tower 311 and an extracting agent flow rate of the rectifying tower 311. Note that the operational condition of the equipment 10 may further include a temperature of the extracting agent to be supplied to the extracting agent feeding stage 341b inside the rectifying tower 311. In this case, the input part 211 is used to input a search range of a temperature of the extracting agent instead of a temperature of the extracting agent, as the specification of the equipment 10.

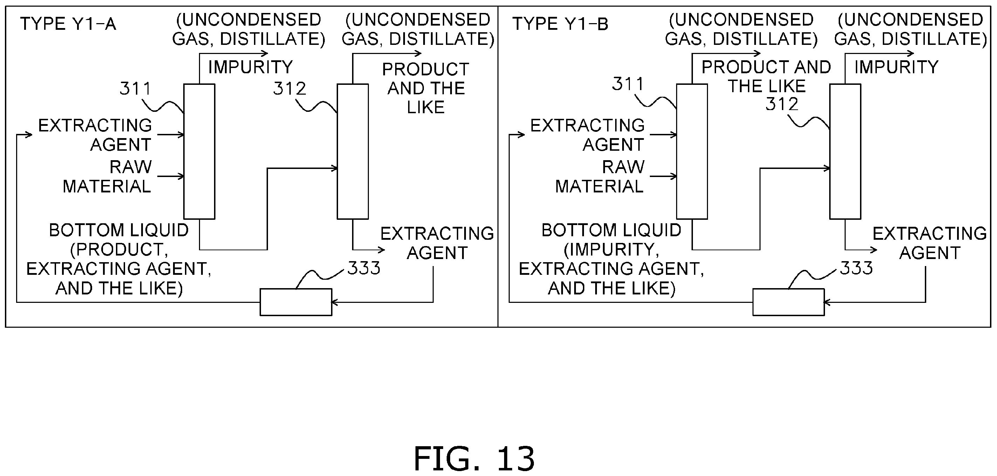

In addition, the input part 211 causes the user to input a type of the equipment 10 regarding the rectifying towers 311, 312, the reboilers 321, 322, and the condensers 331 to 333. Figure 13 is a diagram showing an example of a type of the equipment 10 purifying a raw material by extractive distillation. The input part 211 is used to input one type of the equipment 10 from among, for example, 2 types of the equipment 10, types Y1-A, Y1-B, shown in Figure 13. In the type Y1-A, a raw material and an extracting agent are supplied to the rectifying tower 311, and an impurity (an uncondensed gas or a distillate) and a bottom liquid (a product, the extracting agent, and the like) are taken out from the rectifying tower 311. The bottom liquid taken out from the rectifying tower 311 is supplied to the rectifying tower 312, and the product and the like (an uncondensed gas or a distillate) and the extracting agent are taken out from the rectifying tower 312. The extracting agent taken out (recovered) from the rectifying tower 312 is cooled with the condenser 333, and is supplied to the rectifying tower 311 again. In the type Y1-B, a raw material and an extracting agent are supplied to the rectifying tower 311, and a product and the like (an uncondensed gas or a distillate) and a bottom liquid (an impurity, an extracting agent, and the like) are taken out from the rectifying tower 311. The bottom liquid taken out from the rectifying tower 311 is supplied to the rectifying tower 312, and an impurity (an uncondensed gas or a distillate) and the extracting agent are taken out from the rectifying tower 312. The extracting agent taken out (recovered) from the rectifying tower 312 is cooled with the condenser 333, and is supplied to the rectifying tower 311 again.

### (5-3-2) First arithmetic part

The first arithmetic part 212 performs the rectifying tower model calculation of the rectifying towers 311, 312 based on the operational condition of the equipment 10 selected from the search range and the specification of the equipment 10 included in the input from the user terminal 3. Upon completing the rectifying tower model calculation, the first arithmetic part 212 performs the heat exchanger model calculation of the reboilers 321, 322 and the condensers 331 to 333 based on an output of the rectifying tower model calculation and the specification of the equipment 10. Upon completing the heat exchanger model calculation, the first arithmetic part 212 performs the vertical condenser flooding calculation of the condenser 331 based on the output of the rectifying tower model calculation and the specification of the equipment 10. Upon completing the vertical condenser flooding calculation, the first arithmetic part 212 determines whether outputs of the rectifying tower model calculation, the heat exchanger model calculation, and the vertical condenser flooding calculation satisfy the restricting condition included in the input from the user terminal 3.

### (5-3-3) Second arithmetic part

If the restricting condition is satisfied, the second arithmetic part 213 performs the cost calculation of the equipment 10 based on the output of the rectifying tower model calculation and the specification of the equipment 10. The cost of the equipment 10 is a variable expense of the equipment 10. The variable expense further includes an expense relating to the extracting agent and a utility expense of the condenser 333. For example, the variable expense is computed by "an annual raw material loss + an annual extracting agent loss + an annually consumed utility expense". The annual extracting agent loss is computed by "a marginal expense of the extracting agent × a loss flow rate of the extracting agent × annual operation hours". The annually consumed utility expense is automatically calculated from the result of the heat quantity calculation of the rectifying tower model calculation. The annually consumed utility expense includes an annually consumed steam bill of the reboilers 321, 322 and an annually consumed electrical bill of the condensers 331 to 333.

(5-4)
Although embodiments of the present invention have been described above, it should be understood that various changes can be made to the embodiments and the details without departing from the scope of the appended Claims.

### <Second embodiment>

Hereinafter, mainly parts different from the first embodiment will be described. Contents other than those described in the present embodiment are basically the same as those of the first embodiment.

### (1) Overall configuration

In the first embodiment, the equipment 10 is existing equipment. In the present embodiment, the equipment 10 is newly-established equipment. In this case, variables in the optimization problem include a part of a specification of the equipment 10 (hereinafter, may be described as the specification condition of the equipment 10) in addition to an operational condition of the equipment 10. The specification condition of the equipment 10 includes a number of stages of the rectifying tower 11, a tower diameter of the rectifying tower 11, a packed length of the rectifying tower 11, and a specification of a packed object of the rectifying tower 11 (hereinafter, a group of items constituting the specification of the equipment 10 excluding a group of items constituting the specification condition of the equipment 10, which is a part thereof, will be described as the "specification of the equipment 10").

### (2) Detailed configuration

### (2-1) Equipment

The equipment 10 is newly-established equipment.

### (2-2) Selection system

### (2-2-1) Server device

The server device 2 selects, based on the input from the user terminal 3, an operational condition of the equipment 10 and a specification condition of the equipment 10 such that a predetermined restricting condition is satisfied, and the cost of the equipment 10 becomes minimum. In other words, the server device 2 is a device for solving an optimization problem, which sets the cost of the equipment 10 as an objective function, and selects an operational condition of the equipment 10 and a specification condition of the equipment 10 such that a predetermined restricting condition is satisfied, and a value of the objective function becomes the smallest.

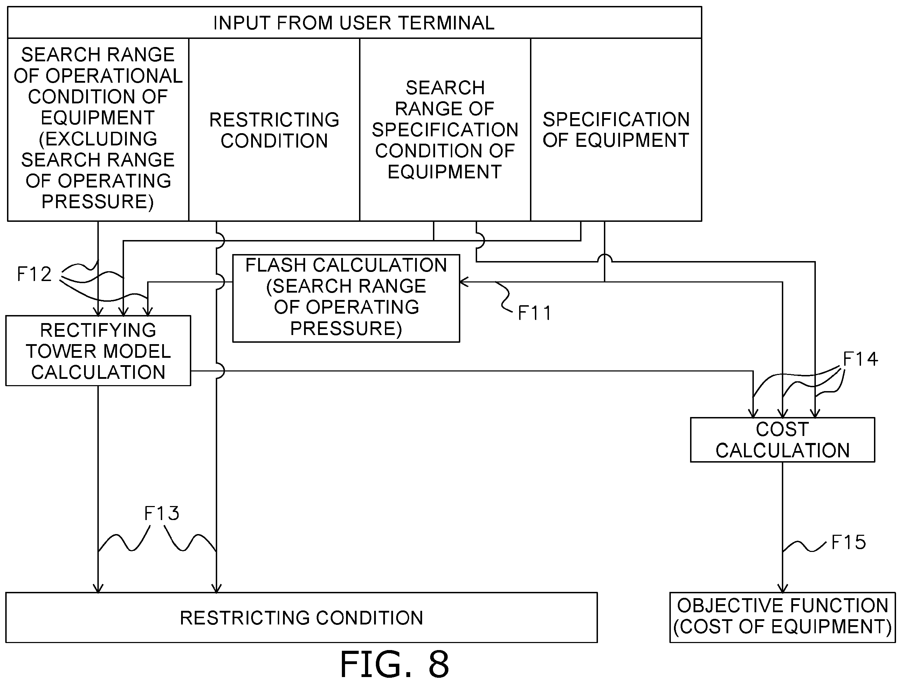

Figure 8 is a diagram showing an overview of the computing process of the objective function in the present embodiment. Figure 8 shows the computing process of the objective function when an operational condition of the equipment 10 and a specification condition of the equipment 10, which are the variables in the optimization problem, are selected one each from a search range of the operational condition of the equipment 10 and a search range of the specification condition of the equipment 10.

As shown in a flow F11, the server device 2 performs a FLASH calculation based on the specification of the equipment 10 included in the input from the user terminal 3. Upon completing the FLASH calculation, as shown in a flow F12, the server device 2 performs the rectifying tower model calculation based on the operational condition of the equipment 10 selected from the search range, the specification condition of the equipment 10 selected from the search range, and the specification of the equipment 10 included in the input from the user terminal 3. Upon completing the rectifying tower model calculation, as shown in a flow F13, the server device 2 determines whether an output of the rectifying tower model calculation satisfies the restricting condition included in the input from the user terminal 3. If the restricting condition is satisfied, as shown in a flow F14, the server device 2 performs the cost calculation based on the output of the rectifying tower model calculation, the selected specification condition of the equipment 10, and the specification of the equipment 10. Upon completing the cost calculation, as shown in a flow F15, the server device 2 uses an output of the cost calculation as the value of the objective function corresponding to the selected operational condition of the equipment 10 and the specification condition of the equipment 10.

### (2-2-1-1) Input part

The input part 211 causes the user to input, through the user terminal 3, a type of the equipment 10, and further input a restricting condition (a restriction relating to an operation of the equipment 10, a spec of a product to be produced with the equipment 10, and a production quantity of the product to be produced with the equipment 10), a specification of the equipment 10, a search range of an operational condition of the equipment 10, and a search range of a specification condition of the equipment 10, in accordance with the type of the equipment 10.

### (2-2-1-2) First arithmetic part

The first arithmetic part 212 automatically executes a simulation of the operation of the equipment 10, and calculates a candidate of the operational condition of the equipment 10 satisfying the restriction relating to the operation of the equipment 10, the spec of the product to be produced with the equipment 10, and the production quantity of the product to be produced with the equipment 10, and a candidate of the specification condition of the equipment 10 satisfying the restriction relating to the operation of the equipment 10, the spec of the product to be produced with the equipment 10, and the production quantity of the product to be produced with the equipment 10.

Firstly, the first arithmetic part 212 performs the FLASH calculation. Specifically, the first arithmetic part 212 computes a search range of an operating pressure of the rectifying tower 11 included in the operational condition of the equipment 10 based on a raw material feeding condition and the like included in the specification of the equipment 10 (corresponding to flow F11 in Figure 8).

Next, the first arithmetic part 212 inputs the operational condition of the equipment 10 selected from the search range, the specification condition of the equipment 10 selected from the search range, and the specification of the equipment 10, to the process simulator 221, and performs the rectifying tower model calculation (corresponding to the flow F12 in Figure 8).

Next, the first arithmetic part 212 determines whether an output of the rectifying tower model calculation satisfies the restricting condition (corresponding to the flow F13 in Figure 8). If the output of the rectifying tower model calculation does not satisfy the restricting condition, the first arithmetic part 212 performs the rectifying tower model calculation using the operational condition of the equipment 10 and the specification condition of the equipment 10 newly selected from the search ranges, until the restricting condition is satisfied.

### (2-2-1-3) Second arithmetic part

The second arithmetic part 213 performs the cost calculation. The cost of the equipment 10 in the present embodiment is an equipment introduction cost required for introduction of the equipment 10, and a variable expense of the equipment 10. The second arithmetic part 213 calculates, from the output of the rectifying tower model calculation, the specification condition of the equipment 10, and the specification of the equipment 10, with a predetermined relational expression, the equipment introduction cost and the variable expense of the equipment 10 when operating in accordance with the candidate, which is an arithmetic result of the first arithmetic part 212 (corresponding to the flows F14, F15 in Figure 8).

The equipment introduction cost is computed by "(the cost of the rectifying tower 11 + the cost of the reboiler 12 + the cost of the condenser 13) ÷ years of depreciation of the equipment 10". The cost of the rectifying tower 11 is computed based on the tower diameter of the rectifying tower 11, the packed length of the rectifying tower 11, and the like, with a predetermined relational expression. The cost of the reboiler 12 is computed based on the exchanged heat quantity of the reboiler 12 and the like, with a predetermined relational expression. The cost of the condenser 13 is computed based on the exchanged heat quantity of the condenser 13 and the like, with a predetermined relational expression. At this time, the tower diameter of the rectifying tower 11 and the packed length of the rectifying tower 11 are included in the specification condition of the equipment 10. In addition, the exchanged heat quantity of the reboiler 12 and the exchanged heat quantity of the condenser 13 are included in the output of the rectifying tower model calculation.

### (2-2-1-4) Selecting part

The selecting part 214 causes the first arithmetic part 212 and the second arithmetic part 213 to repeat the calculations. The selecting part 214 automatically compares equipment introduction costs and variable expenses each corresponding to a plurality of candidates, and from among the plurality of candidates, selects a second operational condition, which is a candidate of the operational condition, and a first specification condition, which is a candidate of the specification condition, having a low total of the equipment introduction cost and the variable expense.

Specifically, the selecting part 214 inputs the operational condition of the equipment 10 and the specification condition of the equipment 10 (the variables in the optimization problem), which are calculated by the first arithmetic part 212, and the cost of the equipment 10 corresponding to the operational condition and the specification condition (the objective function in the optimization problem), which are calculated by the second arithmetic part 213, to the optimization software 222. The selecting part 214 selects, an operational condition of the equipment 10 and a specification condition of the equipment 10 within the search range expected to achieve a smaller value of the objective function, which are output from the optimization software 222 every time an input is made to the optimization software 222, as a new candidate of the operational condition of the equipment 10 and a new candidate of the specification condition of the equipment 10.

### (3) Processing

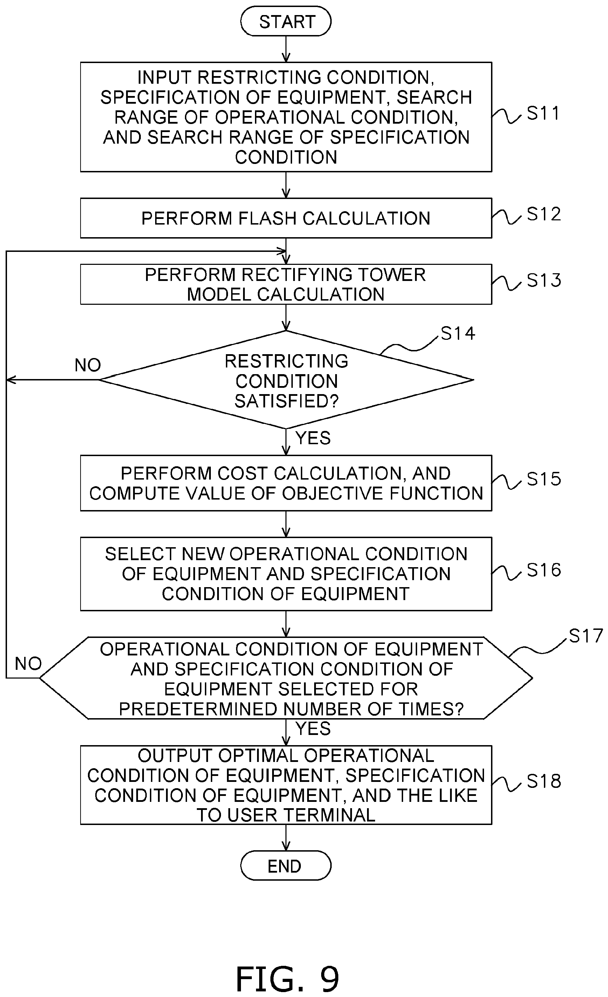

An example of the processing of the selection system 1 in the present embodiment will be described using the flow chart in Figure 9.

As shown in step S11, the selection system 1 causes the user to input, through the user terminal 3, a type of the equipment 10, and further input a restricting condition, a specification of the equipment 10, a search range of an operational condition of the equipment 10, and a search range of a specification condition of the equipment 10, in accordance with the type of the equipment 10.

Upon completing step S11, as shown in step S12, the selection system 1 performs the FLASH calculation based on the specification of the equipment 10.

Upon completing step S12, as shown in step S13, the selection system 1 performs the rectifying tower model calculation based on the operational condition of the equipment 10 and the specification condition of the equipment 10 selected from the search ranges, and the specification of the equipment 10.

Upon completing step S13, as shown in step S14, the selection system 1 determines whether an output of the rectifying tower model calculation satisfies the restricting condition. If the restricting condition is satisfied, the processing advances to step S15. If the restricting condition is not satisfied, the processing returns to step S13, the selection system 1 performs the rectifying tower model calculation using the operational condition of the equipment 10 and the specification condition of the equipment 10 newly selected from the search ranges.

Upon advancing from step S14 to step S15, the selection system 1 performs the cost calculation of the equipment 10 based on an output of the rectifying tower model calculation, the selected specification condition of the equipment 10, and the specification of the equipment 10, and uses an output of the cost calculation as a value of the objective function.

Upon completing step S15, as shown in step S16, the selection system 1 inputs an operational condition of the equipment 10 and a specification condition of the equipment 10, and a value of the objective function corresponding to the operational condition and the specification condition, to the optimization software 222, and selects an operational condition of the equipment 10 and a specification condition of the equipment 10 within the search range expected to achieve a smaller value of the objective function, which are output from the optimization software 222, as a new candidate of the operational condition of the equipment 10 and a new candidate of the specification condition of the equipment 10.

Upon completing step S16, as shown in step S17, the selection system 1 determines whether the operational condition of the equipment 10 and the specification condition of the equipment 10 are selected for a predetermined number of times using the optimization software 222. If the operational condition of the equipment 10 and the specification condition of the equipment 10 are selected for the predetermined number of times, the processing advances to step S18. If the operational condition of the equipment 10 and the specification condition of the equipment 10 are not selected for the predetermined number of times, the processing returns to step S13, and the selection system 1 performs the rectifying tower model calculation with the optimization software 222 using the selected operational condition of the equipment 10 and the selected specification condition of the equipment 10.

Upon advancing from step S17 to step S18, the selection system 1 outputs, to the user terminal 3, an optimal operational condition of the equipment 10, an optimal specification condition of the equipment 10, and the like corresponding to the smallest value of the objective function.

### (4) Feature

(4-1)
In the selection system 1 of the present embodiment, the cost is an equipment introduction cost required for introduction of the equipment 10 and a variable expense of the equipment 10. The first arithmetic part 212 automatically executes a simulation of an operation of the equipment 10, and calculates a candidate of the operational condition satisfying a restriction relating to the operation of the equipment 10, a spec of a product to be produced with the equipment 10, and a production quantity of the product to be produced with the equipment 10, and a candidate of the specification condition of the equipment 10 satisfying the restriction relating to the operation of the equipment 10, the spec of the product to be produced with the equipment 10, and the production quantity of the product to be produced with the equipment 10. The second arithmetic part 213 calculates the equipment introduction cost and the variable expense when operating in accordance with the candidate, which is an arithmetic result of the first arithmetic part 212. The selecting part 214 causes the first arithmetic part 212 and the second arithmetic part 213 to repeat the calculations. The selecting part 214 automatically compares equipment introduction costs and variable expenses each corresponding to a plurality of candidates, and from among the plurality of candidates, selects a second operational condition, which is a candidate of the operational condition, and a first specification condition, which is a candidate of the specification condition, having a low total of the equipment introduction cost and the variable expense.

In the selection system 1 of the present embodiment, the selecting part 214 causes the first arithmetic part 212 and the second arithmetic part 213 to repeat the calculations. The selecting part 214 automatically compares equipment introduction costs and variable expenses each corresponding to a plurality of candidates, and from among the plurality of candidates, selects a second operational condition, which is a candidate of the operational condition, and a first specification condition, which is a candidate of the specification condition, having a low total of the equipment introduction cost and the variable expense. As a result, the selection system 1 can select an operational condition and a specification condition such that the equipment introduction cost and the variable expense become low, on behalf of the unskilled designer of the equipment 10. In addition, the selection system 1 can select an operational condition and a specification condition such that the equipment introduction cost and the variable expense become minimum, on behalf of the skilled designer of the equipment 10.

### (5) Modification

### (5-1) Modification 2A

In the present embodiment, the server device 2 performs the rectifying tower model calculation. Meanwhile, the server device 2 may add a simulation of a reaction process to the rectifying tower model calculation. The simulation of the reaction process computes, for example, a raw material feeding condition in the specification of the equipment 10, which is one input of the rectifying tower model calculation. In this case, the server device 2 selects an operational condition of the equipment 10 such that a total of a variable expense that is obtained from an output of the rectifying tower model calculation, and a variable expense that is obtained from an output of the simulation in the reaction process, become minimum.

Moreover, the server device 2 may select an operational condition of a reactor and the equipment 10 and a specification condition of the reactor and the equipment 10 such that a total cost of the variable expense and the equipment introduction cost of the reactor and the variable expense and the equipment introduction cost of the rectifying tower 11 become minimum.

### (5-2) Modification 2B

In the present embodiment, the server device 2 determines whether the restricting condition is satisfied, and then computes a value of the objective function. However, the determination on whether the restricting condition is satisfied may be realized by including a term relating to the restricting condition into the objective function.

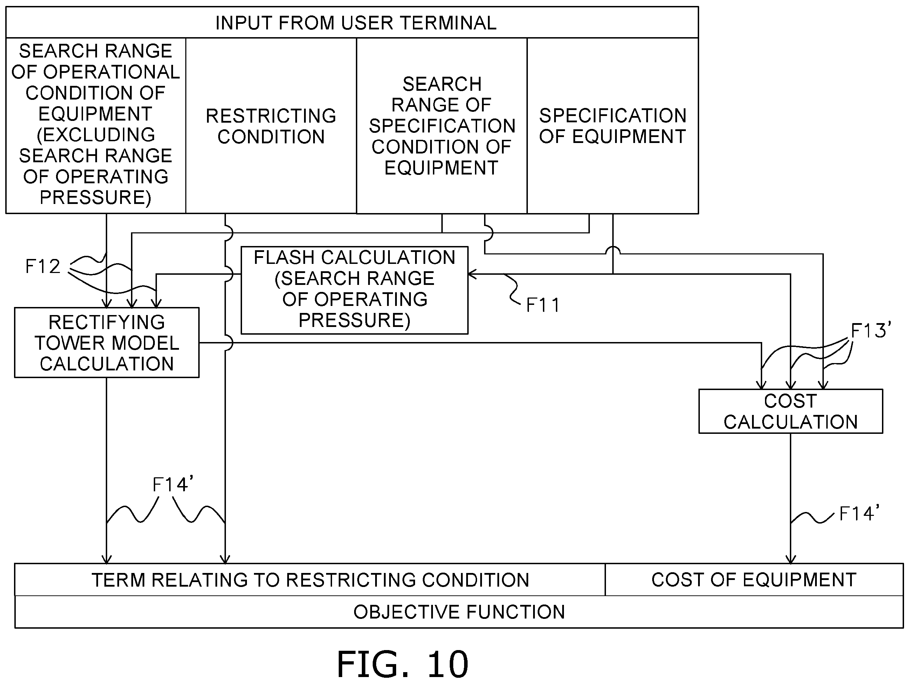

Figure 10 is a diagram showing an overview of the computing process of the objective function in the present modification. As shown in Figure 10, the objective function is a sum of the cost of the equipment 10 and the term relating to the restricting condition. Unlike Figure 8, upon completing the rectifying tower model calculation of the flow F12, as shown in a flow F13', the server device 2 performs the cost calculation based on an output of the rectifying tower model calculation, the specification condition of the equipment 10, and the specification of the equipment 10. Upon completing the cost calculation, as shown in a flow F14', the server device 2 substitutes the output of the rectifying tower model calculation and the restricting condition included in the input from the user terminal 3 into the term relating to the restricting condition of the objective function, and further substitutes the cost of the equipment 10, which is an output of the cost calculation, into the objective function, thereby computing a value of the objective function.

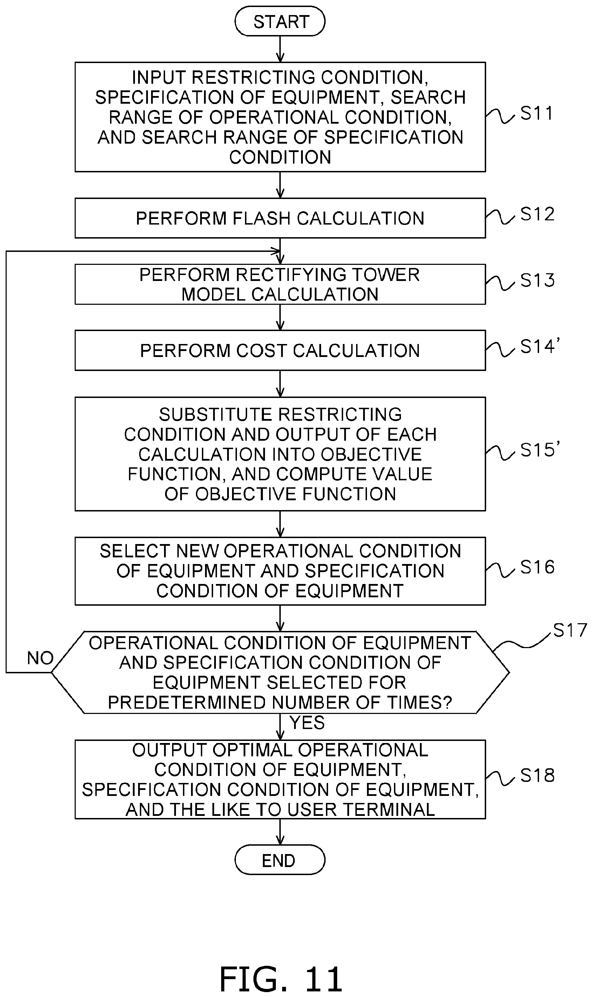

Figure 11 is a flow chart for describing an example of the processing of the selection system 1 in the present modification. Unlike Figure 9, upon completing step S13, as shown in step S14', the selection system 1 performs the cost calculation of the equipment 10 based on the output of the rectifying tower model calculation, the selected specification condition of the equipment 10, and the specification of the equipment 10. Upon completing step S14', as shown in step S15', the selection system 1 substitutes outputs of the rectifying tower model calculation and the cost calculation, and the restricting condition included in the input from the user terminal 3, into the objective function, thereby computing a value of the objective function.

### (5-3) Modification 2C

The equipment 10 may purify a raw material by extractive distillation, and produce a target product. Hereinafter, mainly parts different from the present embodiment, and the modification 1C in the first embodiment, will be described. Contents other than those described in the present modification are basically the same as those of the present embodiment and the modification 1C in the first embodiment.

### (5-3-1) Input part

The input part 211 causes the user to input a restricting condition (a restriction relating to an operation of the equipment 10, a spec of a product to be produced with the equipment 10, and a production quantity of the product to be produced with the equipment 10), a specification of the equipment 10, a search range of an operational condition of the equipment 10, a search range of an specification condition of the equipment 10, and a type of the equipment 10, regarding the rectifying towers 311, 312, the reboilers 321, 322, and the condensers 331 to 333. In particular, the specification condition of the equipment 10 includes a number of stages of the rectifying towers 311, 312, a tower diameter of the rectifying towers 311, 312, a packed length of the rectifying towers 311, 312, and a specification of a packed object of the rectifying towers 311, 312.

### (5-3-2) First arithmetic part

The first arithmetic part 212 performs the FLASH calculation based on the specification of the equipment 10. Upon completing the FLASH calculation, the first arithmetic part 212 performs the rectifying tower model calculation based on the operational condition of the equipment 10 selected from the search range, the specification condition of the equipment 10 selected from the search range, and the specification of the equipment 10. Upon completing the rectifying tower model calculation, the first arithmetic part 212 determines whether an output of the rectifying tower model calculation satisfies the restricting condition.

### (5-3-3) Second arithmetic part

If the restricting condition is satisfied, the second arithmetic part 213 performs the cost calculation based on the output of the rectifying tower model calculation, the selected specification condition of the equipment 10, and the specification of the equipment 10. The cost of the equipment 10 is an equipment introduction cost required for introduction of the equipment 10, and a variable expense of the equipment 10. The equipment introduction cost is computed by "(the cost of the rectifying towers 311, 312 + the cost of the reboilers 321, 322 + the cost of the condensers 331 to 333) ÷ years of depreciation of the equipment 10".

(5-4)
Although embodiments of the present invention have been described above, it will be understood that various changes can be made to the embodiments and the details without departing from the scope of the appended Claims.

### [Reference Signs List]

1 Selection system
10 Equipment
11, 111, 112, 311, 312 Rectifying tower
11b, 311b, 312b Tower bottom part
11t, 311t, 312t Tower top part
12, 321, 322 Reboiler (heater)
13, 331, 332 Condenser (cooler)
14a, 341a Raw material feeding stage
211 Input part
212 First arithmetic part
213 Second arithmetic part
214 Selecting part
333 Condenser (extracting agent cooler)
341b Extracting agent feeding stage

### [Citation List]

### [Patent Literature]

[Patent Literature 1] JPA No. 2014-094938

## Claims

1. A selection system (1) for selecting an operational condition of equipment (10) in which a cost including a variable expense of the equipment is low,
the equipment including a rectifying tower (11, 111, 112, 311, 312) which is configured to purify a raw material and produce a product,
**characterized by**:
an input part (211) which is configured to be used to input a restriction relating to an operation of the equipment, a spec of the product to be produced with the equipment, and a production quantity of the product;
a first arithmetic part (212) which is configured to automatically execute a simulation of the operation of the equipment, and calculate a candidate of the operational condition satisfying the restriction, the spec, and the production quantity;
a second arithmetic part (213) which is configured to calculate the variable expense when operating in accordance with the candidate, which is an arithmetic result of the first arithmetic part; and
a selecting part (214) which is configured to cause the first arithmetic part and the second arithmetic part to repeat the calculations, and automatically compare variable expenses each corresponding to a plurality of candidates to select a first operational condition, which is a candidate of the operational condition having a low variable expense, from among the plurality of candidates,
wherein
the operational condition of the equipment includes at least one of a number of stages, an operating pressure, a raw material feeding stage (14a, 341a), and a reflux volume, of the rectifying tower.

2. The selection system (1) according to claim 1, wherein
the equipment is configured to purify the raw material by extractive distillation, and
the operational condition of the equipment further includes at least one of an extracting agent feeding stage (341b) and an extracting agent flow rate of the rectifying tower.

3. The selection system (1) according to claim 1 or 2, wherein
the cost is the variable expense of the equipment, which is existing, and
the input part is configured to be further used to input a specification of the equipment.

4. The selection system (1) according to any one of claims 1 to 3, wherein
the cost is an equipment introduction cost required for introduction of the equipment and the variable expense of the equipment,
the first arithmetic part is configured to automatically execute the simulation of the operation of the equipment, and calculate a candidate of the operational condition satisfying the restriction, the spec, and the production quantity, and a candidate of a specification of the equipment satisfying the restriction, the spec, and the production quantity,
the second arithmetic part is configured to calculate the equipment introduction cost and the variable expense when operating in accordance with the candidate, which is an arithmetic result of the first arithmetic part, and
the selecting part is configured to cause the first arithmetic part and the second arithmetic part to repeat the calculations, and automatically compare equipment introduction costs and variable expenses, each corresponding to a plurality of candidates, to select a second operational condition, which is a candidate of the operational condition, and a first specification of the equipment, which is a candidate of the specification of the equipment, having a low total of the equipment introduction cost and the variable expense from among the plurality of candidates.

5. The selection system (1) according to any one of claims 1 to 4, wherein
the input part is configured to be used to input a plurality of input items regarding the restriction, the spec, and the production quantity, and
the plurality of input items include an essential input item and an optional input item.

6. The selection system (1) according to claim 5, wherein
the input part is configured to be further used to input a type of the equipment, and configured to change the essential input item regarding the restriction in accordance with the type of the equipment, which is input.

7. The selection system (1) according to any one of claims 1 to 6, wherein
the selecting part is configured to select the first operational condition with an optimization algorithm for updating the operational condition such that the variable expense becomes low.

## Patentansprüche

1. Auswahlsystem (1) zum Auswählen eines Betriebszustands einer Anlage (10), in dem Kosten, einschließlich variabler Kosten der Anlage, niedrig sind,
wobei die Anlage eine Rektifikationskolonne (11, 111, 112, 311, 312) aufweist, der konfiguriert ist, ein Rohmaterial zu reinigen und ein Produkt herzustellen,
**gekennzeichnet durch**:
einen Eingabeteil (211), der konfiguriert ist, eine Einschränkung bezüglich des Betriebs der Anlage, eine Spezifikation des Produkts, das mit der Anlage hergestellt werden soll, und eine Produktionsmenge des Produkts einzugeben;
einen ersten Rechenteil (212), der konfiguriert ist, automatisch eine Simulation des Betriebs der Anlage durchzuführen und einen Kandidaten für die Betriebsbedingungen zu berechnen, der die Einschränkung, die Spezifikation und die Produktionsmenge erfüllt;
einen zweiten Rechenteil (213), der konfiguriert ist, die variablen Kosten beim Betrieb gemäß dem Kandidaten zu berechnen, der ein Rechenergebnis des ersten Rechenteils ist; und
einen Auswahlteil (214), der konfiguriert ist, den ersten Rechenteil und den zweiten Rechenteil zu veranlassen, die Berechnungen zu wiederholen, und automatisch die variablen Kosten, die jeweils mehreren Kandidaten entsprechen, zu vergleichen, um eine erste Betriebsbedingung, die ein Kandidat der Betriebsbedingung mit niedrigen variablen Kosten ist, aus den mehreren Kandidaten auszuwählen,
wobei
die Betriebsbedingung der Anlage mindestens eine einer Anzahl von Stufen, eines Betriebsdrucks, einer Rohmaterial-Beschickungsstufe (14a, 341a) und eines Rückflussvolumens der Rektifikationskolonne aufweist.

2. Auswahlsystem (1) nach Anspruch 1, wobei
die Anlage konfiguriert ist, das Rohmaterial durch extraktive Destillation zu reinigen, und
der Betriebszustand der Anlage ferner mindestens eine einer Extraktionsmittel-Beschickungsstufe (341b) und einer Extraktionsmittel-Durchflussrate der Rektifikationskolonne aufweist.

3. Auswahlsystem (1) nach Anspruch 1 oder 2, wobei
die Kosten die variablen Kosten der Anlage sind, die vorhanden ist, und
der Eingabeteil konfiguriert ist, ferner verwendet zu werden, um eine Spezifikation der Anlage einzugeben.

4. Auswahlsystem (1) nach einem der Ansprüche 1 bis 3, wobei
die Kosten Anlageneinführungskosten, die für die Einführung der Anlage erforderlich sind, und die variablen Kosten der Anlage sind,
der erste Rechenteil konfiguriert ist, automatisch die Simulation des Betriebs der Anlage durchzuführen und einen Kandidaten der Betriebsbedingungen, der die Einschränkung, die Spezifikation und die Produktionsmenge erfüllt, und einen Kandidaten einer Spezifikation der Anlage, der die Einschränkung, die Spezifikation und die Produktionsmenge erfüllt, zu berechnen,
der zweite Rechenteil konfiguriert ist, die Anlageneinführungskosten und die variablen Kosten bei Betrieb gemäß dem Kandidaten zu berechnen, der ein Rechenergebnis des ersten Rechenteils ist, und
der Auswahlteil konfiguriert ist, den ersten Rechenteil und den zweiten Rechenteil zu veranlassen, die Berechnungen zu wiederholen und automatisch Anlageneinführungskosten und variable Kosten, die jeweils mehreren Kandidaten entsprechen, zu vergleichen, um eine zweite Betriebsbedingung, die ein Kandidat für die Betriebsbedingung ist, und eine erste Spezifikation der Anlage, die ein Kandidat für die Spezifikation der Anlage ist, die eine niedrige Gesamtsumme aus den en Anlageneinführungskosten und den variablen Kosten aufweist, aus den mehreren Kandidaten auszuwählen.

5. Auswahlsystem (1) gemäß einem der Ansprüche 1 bis 4, wobei
der Eingabeteil konfiguriert ist, verwendet zu werden, mehrere Eingabepunkte bezüglich der Einschränkung, der Spezifikation und der Produktionsmenge einzugeben, und
die mehreren Eingabepunkte einen wesentlichen Eingabepunkt und einen optionalen Eingabepunkt aufweisen.

6. Auswahlsystem (1) nach Anspruch 5, wobei
der Eingabeteil konfiguriert ist, ferner verwendet zu werden, um einen Typ der Anlage einzugeben, und konfiguriert ist, den wesentlichen Eingabepunkt bezüglich der Einschränkung gemäß dem Typ der Anlage zu ändern, der eingeben wird.

7. Auswahlsystem (1) nach einem der Ansprüche 1 bis 6, wobei
der Auswahlteil konfiguriert ist, die erste Betriebsbedingung mit einem Optimierungsalgorithmus zum Aktualisieren der Betriebsbedingung so auszuwählen, dass die variablen Kosten niedrig werden.

## Revendications

1. Système de sélection (1) destiné à sélectionner une condition de fonctionnement d'un équipement (10) où un coût, comprenant des frais variables liés à l'équipement, est peu élevé,
ledit équipement comprend une colonne de rectification (11, 111, 112, 311, 312) prévue pour purifier une matière première et réaliser un produit,
**caractérisé par** :
une partie d'entrée (211) prévue pour être utilisée afin de saisir une contrainte relative au fonctionnement de l'installation, une spécification du produit à réaliser avec l'installation, et un volume de production dudit produit ;
une première partie arithmétique (212) prévue pour exécuter automatiquement une simulation du fonctionnement de l'équipement et pour calculer une condition de fonctionnement candidate satisfaisant à la contrainte, aux spécifications et au volume de production ;
une deuxième partie arithmétique (213) prévue pour calculer les frais variables lors d'un fonctionnement conforme à la condition candidate, laquelle est le résultat arithmétique de la première partie arithmétique ; et
une partie de sélection (214) prévue pour entraîner la première partie arithmétique et la deuxième partie arithmétique à répéter les calculs, et pour comparer automatiquement des frais variables correspondant respectivement à une pluralité de conditions candidates afin de sélectionner, parmi cette pluralité de conditions candidates, une première condition de fonctionnement, laquelle est une condition candidate parmi les conditions de fonctionnement présentant des frais variables peu élevés,
où
la condition de fonctionnement de l'équipement comprend un certain nombre d'étages et/ou une pression de service et/ou un étage d'alimentation en matière première (14a, 341a) et/ou un volume de reflux de la colonne de rectification.

2. Système de sélection (1) selon la revendication 1, où
l'équipement est prévu pour purifier la matière première par distillation extractive, et
la condition de fonctionnement de l'installation comprend en outre un étage d'alimentation en agent d'extraction (341b) et/ou un débit d'agent d'extraction de la colonne de rectification.

3. Système de sélection (1) selon la revendication 1 ou la revendication 2, où
le coût correspond aux frais variables de l'équipement existant, et
la partie d'entrée est prévue pour être en outre utilisée afin de saisir une spécification de l'équipement.

4. Système de sélection (1) selon l'une des revendications 1 à 3, où
le coût correspond au coût d'introduction de l'équipement exigé pour sa mise en service et aux frais variables liés à l'équipement,
la première partie arithmétique est prévue pour exécuter automatiquement la simulation du fonctionnement de l'équipement et pour calculer une condition de fonctionnement candidate satisfaisant à la contrainte, aux spécifications et au volume de production, et une spécification candidate de l'équipement satisfaisant à la contrainte, aux spécifications et au volume de production ;
la deuxième partie arithmétique est prévue pour calculer le coût d'introduction de l'équipement les frais variables lors d'un fonctionnement conforme à la condition candidate, laquelle est le résultat arithmétique de la première partie arithmétique, et
la partie de sélection est prévue pour entraîner la première partie arithmétique et la deuxième partie arithmétique à répéter les calculs, et à comparer automatiquement les coûts d'introduction de l'équipement et les frais variables, correspondant chacun à une pluralité de conditions candidates, afin de sélectionner, parmi cette pluralité de conditions candidates, une deuxième condition de fonctionnement, et une première spécification de l'équipement, laquelle est une spécification candidate parmi les spécifications de l'équipement, présentant un faible montant total des coûts d'introduction de l'équipement et des frais variables.

5. Système de sélection (1) selon l'une des revendications 1 à 4, où
la partie d'entrée est prévue pour être utilisée afin de saisir une pluralité d'éléments d'entrée relatifs à la contrainte, à la spécification et au volume de production, et
la pluralité d'éléments de saisie comprend un élément de saisie indispensable et un élément de saisie facultatif.

6. Système de sélection (1) selon la revendication 5, où
la partie de saisie est prévue pour être en outre utilisée pour saisir un type d'équipement, et pour modifier l'élément de saisie indispensable relatif à la restriction en fonction du type d'équipement saisi.

7. Système de sélection (1) selon l'une des revendications 1 à 6, où
la partie de sélection est prévue pour sélectionner la première condition de fonctionnement avec un algorithme d'optimisation pour mettre à jour la condition de fonctionnement de manière à réduire les frais variables.
